# EUROPÄISCHE PATENTSCHRIFT

(11) **EP 0 443 542 B1**
(45) Veröffentlichungstag und Bekanntmachung des Hinweises auf die Patenterteilung: **04.06.1997**
(21) Anmeldenummer: 91102413.1
(22) Anmeldetag: 20.02.1991
(51) Int. Cl.: C08G 63/06

(54) **Verfahren zur Herstellung von Polyestern auf der Basis von Hydroxycarbonsäuren**
Process for the preparation of polyesters from hydroxycarboxylic acids
Procédé pour la préparation de polyesters à partir d'acides hydroxycarboxyliques

(30) Priorität: 21.02.1990 DE 4005415
(43) Veröffentlichungstag der Anmeldung: 28.08.1991
(60) Teilanmeldung: 96106159.5
(73) Patentinhaber: BOEHRINGER INGELHEIM KG, 55216 Ingelheim (DE); BOEHRINGER INGELHEIM INTERNATIONAL GmbH, 55218 Ingelheim am Rhein (DE)
(72) Erfinder: Buchholz, Berthold, Dr., W-6507 Ingelheim am Rhein (DE)

(56) Entgegenhaltungen:
- EP-A- 0 026 599
- DE-C- 344 034
- GB-A- 958 798
- US-A- 4 622 413
- J. ORG. CHEM., Band 46, Nr. 24, 1981, Seiten 4964-4968; D.A. JAEGER et al.: "Effect of inverse micelles on the competition between lactonization and polymerization reactions of an omega-hydroxy carboxylic acid"
- IDEM
- M. FIESER et al.: "Reagents for Organic Synthesis", Band 9, 1981, Seiten 156-157, John Wiley & Sons, New York, US
- PATENT ABSTRACTS OF JAPAN, Band 10, Nr. 98 (C-339), 15. April 1986; & JP-A-60 229 919 (MITSUBISHI KASEI KOGYO K.K.) 15-11-1985
- CHEM. BER., Band 108, Nr. 12, Dezember 1975, Seiten 3730-3735; D. GEFFKEN et al.: "Zur Reaktion 2,2-disubstituierter 3-Hydroxypropionsäuren mit aliphatischen Carbodiimiden"
- PATENT ABSTRACTS OF JAPAN, Band 13, Nr. 431 (C-640)[3779], 26. September 1989; & JP-A-1 167 329 (IDEMITSU KOSAN CO., LTD) 03-07-1989
- MAKROMOL. CHEM., Band 188, Nr. 12, December 1987, Seiten 2821-2830; I.M. PANAYOTOV et al.: "Polyesters prepared by polycondensation in the presence of carbodiimides, 1. Preparation of polyesters from aliphatic dicarboxylic acids and diols under mild conditions"
- MAKROMOL. CHEM., Band 191, Nr. 1, Januar 1990, Seiten 213-224; N. BELCHEVA et al.: "Polyesters prepared by polycondensation in the presence of carbodiimides, 2. On the reaction of methyl alpha-(S)-malate with N,N'- dicyclohexylcarbodiimide under mild conditions"
- J. ORG. CHEM., Band 33, Nr. 11, November 1968, Seiten 4173-4176; H.L. WEHRMEISTER et al.: "Total synthesis of the macrocyclic lactone, dideoxyzearalane"
- F. PILATI: "Polyesters" in "Comprehensive Polymer Science", Band 5, 1989, Seite 275ff, Pergamon Press, Oxford, GB

## Beschreibung

Die vorliegende Erfindung betrifft ein Verfahren zum Herstellen von Polyestern auf der Basis von Hydroxycarbonsäuren, insbesondere von α- oder β-Hydroxycarbonsäuren bzw. deren Oligomeren gemäß folgendem Reaktionsschema 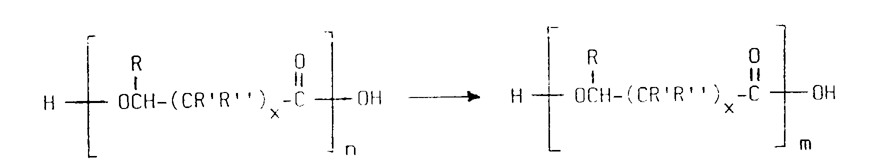 worin R, R' und R'' unabhängig voneinander einen Alkylrest und/oder Wasserstoff, bevorzugt einen Niederalkylrest mit 1-6 C-Atomen und/oder Wasserstoff und besonders bevorzugt eine Methylgruppe und/oder Wasserstoff und
x und m sowie n ganze Zahlen - wobei m > n ist und x auch Null sein kann - bedeuten können.

Alkyl steht im allgemeinen für einen unverzweigten oder verzweigten Kohlenwasserstoffrest mit 1 bis 12 Kohlenstoffatomen, der gegebenenfalls mit einem Halogenatom oder mehreren Halogenatomen - vorzugsweise Fluor - substituiert sein kann, die untereinander gleich oder verschieden sein können, wobei Niederalkylreste bevorzugt sind.

Niederalkyl steht im allgemeinen für einen verzweigten oder unverzweigten Kohlenwasserstoffrest mit 1 bis 4 Kohlenstoffatomen. Als Beispiel seien Methyl, Ethyl, Propyl, Isopropyl, Butyl, Isobutyl, Pentyl, Isopentyl, Neopentyl, Hexyl, Isohexyl, Heptyl, Isoheptyl, Octyl sowie Isooctyl genannt.

Die Umsetzung erfolgt in Gegenwart von Phosgen, Diphosgen oder Triphosgen Als weitere geeignete reaktionsfördernde Hilfsstoffe kommen Substanzen in Betracht, wie sie z.B. in R.C. Larock, Comprehensive Organic Transformations - A Guide to Functional Group Preparations-VCH-Verlagsgesellschaft Weinheim 1989 S. 941 ff. und S. 966 aufgeführt sind.

Als reaktionsfördernde Hilfsstoffe ist neben Phosgen und Diphosgen Bis(trichlormethyl)carbonat (Triphosgen) besonders wertvoll.

Als Acylierungskatalysatoren finden Pyridin bzw. Pyridinderivate Verwendung, wobei Pyridin bzw. Dialkylaminopyridine, wie sie aus der Literatur bekannt sind [G. Höfle, W. Steglich und H. Vorbrüggen, Angew. Chem. 90 (1978) 602] bevorzugt werden. Besonders bevorzugt werden dabei Pyridin und 4-Dialkylaminopyridine eingesetzt. Als besonders wertvoll erweisen sich dabei Pyridin und 4-Dimethylaminopyridin und 4-Pyrrolidinopiperidin [W. Steglich und G. Höfle, Angew. Chem. 81 (1969) 1001] sowie 4-Piperidinopyridin.

Für die Herstellung von Polyestern auf der Basis von Hydroxycarbonsäuren, insbesondere von α- bzw. β-Hydroxycarbonsäuren - speziell von Milchsäure und/oder Glykolsäure - sind prinzipiell zwei Verfahren bekannt:

Zunächst besteht die Möglichkeit, die entsprechende(n) Hydroxycarbonsäure(n) entweder in der Schmelze bei erhöhter Temperatur und vermindertem Druck oder in einem geeigneten Lösungsmittel - unter azeotropen Abdestillieren des bei der Kondensationsreaktion entstehenden Reaktionswassers - umzusetzen.

Auf dem Wege derartiger Polykondensationsreaktionen sind jedoch lediglich Polyester mit einem geringen Molekulargewicht zugänglich [C.H. Holten, Lactic Acid, Verlag Chemie, Weinheim 1971, S. 225 ff].

Unter Anwendung der azeotropen Destillation können ebenfalls nur Molekulargewichte von ca. 10.000 erreicht werden [D.L. Wise, T.D. Fellmann, J.E. Sanderson und R.L. Wentworth in G. Gregoriadis (Hrsg.) Drug Carriers in Medicine, Academic Press, London 1979 S. 241 ff und Zit. Lit.], wobei das erreichbare Molekulargewicht bei Polykondensationsreaktionen von Milchsäure bzw. Glykolsäure signifikant vom Grad der Dehydratation (Grad der Entwässerung) abhängt. So erfordert ein Molgewicht von ca. 10.000 einen Dehydrationsgrad von > 99,28 % [E.M. Filachione und C.H. Fischer, Ind. Eng. Chem. 36 (1944) 223].

Neuere Dehydrationsverfahren sollen dagegen die Herstellung von Polymeren mit einem Molekulargewicht von ca. 35.000 erlauben [EP 171 907].

Weiterhin sollen unter Anwendung von Kondensationskatalysatoren höhere Molekulargewichte erzielbar sein. So sollen Polymere bzw. Copolymere der Milch- bzw. der Glykolsäure mit einem Molekulargewicht bis ca. 30.000 unter Verwendung von anorganischen Säurekatalysatoren herstellbar sein [EP 172 636].

Der Einsatz von Ionenaustauschern als Kondensationskatalysatoren soll die Herstellung von Polymeren mit einem Molekulargewicht von ca. 35.000 ermöglichen [EP 26 599].

Der zweite Zugang zu derartigen Polyestern besteht in der ringöffnenden Polymerisation der entsprechenden Lactide (Dilactone). Bislang sind lediglich auf diesem Wege Polymere bzw. Copolymere mit einem Molekulargewicht von MW > 35.000 herstellbar.

Der Nachteil derartiger Polymerisationsverfahren besteht jedoch darin, daß Rückstände der als Katalysatoren zugesetzten Metallverbindungen (vorzugsweise Zinn- bzw. Zinkverbindungen) durch einen nachgeschalteten Reinigungsschritt entfernt werden müssen, welcher - in Abhängigkeit davon, wieviel an Katalysatorresten im Hinblick auf das geplante Einsatzgebiet tolerierbar ist - unter Umständen sehr aufwendig sein kann [EP 270 987].

Aufgabe der vorliegenden Erfindung ist es daher, ein Verfahren zur Herstellung von polyestern auf der Basis von Hydroxycarbonsäuren, insbesondere von α- bzw. β-Hydroxycarbonsäuren zur Verfügung zu stellen, welches die Herstellung derartiger Polyester mit einem hohen Molekulargewicht erlaubt.

Es ist eine weitere Aufgabe der vorliegenden Erfindung, ein Verfahren zur Verfügung zu stellen, welches die Herstellung von Polyestern erlaubt, die keine Katalysatorrückstände - insbesondere keine Rückstände von Metallverbindungen - aufweisen.

Es ist zudem eine Aufgabe der vorliegenden Erfindung, ein Verfahren zur Herstellung der erfindungsgemäßen Polyester zur Verfügung zu stellen, welches die Variation der jeweils angestrebten Molmassen in möglichst weiten Grenzen erlaubt.

Es ist eine weitere Aufgabe der vorliegenden Erfindung, ein Verfahren zur Verfügung zu stellen, welches die Herstellung der erfindungsgemäßen Polyester als sog. "Random"- und/oder Blockpolymere bzw. -copolymere ermöglicht.

Erfindungsgemäß werden diese Aufgaben dadurch gelöst, daß man die entsprechenden Hydroxycarbonsäuren bzw. deren Oligomeren in Anwesenheit der genannten reaktionsfördernden Hilfsstoffen (Verknüpfungsreagenzien), und gegebenenfalls in Gegenwart eines Acylierungskatalysators des angegebenen Typs einer Polykondensationsreaktion unterwirft. - Die Verwendung von Verknüpfungsreagenzien - wie z.B. CDI, Triphosgen oder Dicyclohexylcarbodiimid - bei Veresterungsreaktionen ist an und für sich aus dem Stand der Technik bekannt [J. March, Advanced Organic Chemistry, 3^{rd} Ed., John Wiley and Sons, New York 1985, S. 348 ff. und zit. Lit.: B.C. Larock, Comprehensive Organic Transformations, VCH-Verlagsgesellschaft, Weinheim 1989, S. 941 ff und S. 966 ff; J.M. Panayotov, N. Belcheva und C. Tsetanov, "Preparations of polyesters from aliphatic dicarboxylic acids and diols under mild conditions", Makromol. Chem. 188 (1987) 2821].

Die Polykondensationsreaktion selbst kann dabei in der Schmelze oder in einem inerten Lösungsmittel durchgeführt werden, welches den Reaktionsverlauf nicht nachteilig beeinflußt. Als Lösungsmittel eignen sich beispielsweise diejenigen Lösungsmittel, die bei Polykondensationsreaktionen üblicherweise eingesetzt werden, wozu unter anderem halogenierte Kohlenwasserstoffe - wie z.B. Dichlormethan oder Trichlormethan - oder Ether - wie z.B. Tetrahydrofuran - gehören.

Die gewünschte Molmasse kann durch Variation der Reaktionsbedingungen - Temperatur, Reaktionszeit, Mol-Verhältnis von Monomer bzw. Oligomer zu Transacylierungskatalysator sowie insbesondere von Hilfsstoff bzw. Verknüpfungsreagenz zu Monomer bzw. Oligomer - gesteuert werden.

Ist man zum Beispiel an einem möglichst hohen Molekulargewicht des erfindungsgemäßen Polykondensationsproduktes interessiert, wird der Einsatz einer mindestens stöchiometrischen Mengen an Verknüpfungsreagenz erforderlich. Daneben kann je nach Reinheitsgrad - insbesondere Feuchtigkeitsgehalt - der eingesetzten Edukte ein Überschuß an Verknüpfungsreagenz - im Vergleich zum Einsatz entsprechend reinerer Ausgangsstoffe - notwendig werden.

Werden als Verknüpfungsreagenzien beispielsweise Phosgen oder Triphosgen eingesetzt, ist es zum Abfangen des während der Reaktion entstehenden Halogenwasserstoffes vorteilhaft, der Reaktionsmischung eine Base, vorzugsweise ein Amin - wie z.B. Triethylamin oder Pyridin - zuzusetzen.

Die Reinigung des Polykondensationsproduktes (insbesondere das Abtrennen von niedermolekularen Reaktionsprodukten oder umgesetzten Edukten sowie von Verknüpfungsreagenz) erfolgt nach den aus dem Stand der Technik bekannten Reinigungsverfahren.

In Abhängigkeit von der Art des erhaltenen Polykondensationsproduktes können dabei entweder Extraktions- oder Umfällverfahren eingesetzt werden.

Als Edukte werden Hydroxycarbonsäuren - insbesondere α- oder β-Hydroxycarbonsäuren gleicher oder verschiedener Konstitution - wie z.B. L-Milchsäure, D-Milchsäure. Mischungen von D- und L-Milchsäure und Glykolsäure - bzw. deren Oligomere und Co-Oligomere - eingesetzt.

Bei der Auswahl der Edukte bzw. der Präpolymere kann der Kondensationsgrad (Polymerisationsgrad) in weiten Bereichen variiert werden und zwischen 1 und ca. 1000 liegen. Bevorzugt wird ein Kondensationsgrad zwischen 10 und 100.

Neben Homopolymeren und statistischen Copolykondensationsprodukten sind unter Anwendung des erfindungsgemäßen Verfahrens durch den Einsatz verschiedener Präpolymere auch Blockpolymerisate zugänglich, wie z.B. Di- oder Triblockpolymerisate oder Multiblockpolymerisate.

Als Beispiele seien Multiblockpolymere aus L-Laktid und D,L-Laktid und/oder D-Laktid genannt.

Bei den erfindungsgemäß hergestellten Blockpolymeren kann somit durch die entsprechende Wahl des Polymerisationsgrades der Edukte Einfluß auf die Länge des entsprechenden Blocks im resultierenden Copolymerisat genommen werden. Mit dieser Maßnahme kann Einfluß auf die Charakteristika des Polykondensationsproduktes genommen werden. Durch Endgruppenmodifizierung d.h. durch Blockieren der terminalen Hydroxyl- bzw. der terminalen Carboxylgruppe der Präpolymere wird ebenfalls die Möglichkeit eröffnet, Diblock-Polykondensationsprodukte herzustellen.

Gegenüber den aus dem Stand der Technik bekannten Verfahren unterscheidet sich das erfindungsgemäße Verfahren dadurch, daß Polykondensationsprodukte mit höheren Molekulargewichten herstellbar sind, womit Polymere zugänglich gemacht werden, die sonst nur auf dem Wege der ringöffnenden Polymerisation herstellbar sind. Gegenüber der ringöffnenden Polymerisation besitzt jedoch das erfindungsgemäße Verfahren denjenigen Vorteil, daß es eine wesentlich einfachere und somit wirtschaftlichere Methode zum Entfernen des Verknüpfungsreagenz ermöglicht.

Das Reaktionsprodukt ist somit vollkommen frei von Metallverbindungen.

Außerdem ist das erfindungsgemäße Verfahren a priori denjenigen, welche auf der Polymerisation von Lactiden basieren, überlegen, da die Oligomeren (aus denen die zur Durchführung der Polymerisation benötigten Lactide erst hergestellt werden müssen) in dem erfindungsgemäßen Verfahren direkt als Edukte eingesetzt werden können.

Ferner ermöglicht das erfindungsgemäße Verfahren die Herstellung von "random"-Polykondensaten, in denen tatsächlich eine statistische Verteilung beispielsweise der Milchsäure- und Glykolsäureeinheiten vorliegt, während bei der Polymerisation beispielsweise von Glycolid und Lactid aufgrund der höheren Rektivität des Glycolids, die Gefahr besteht, daß in dem Polymerisat - unerwünschterweise - Glycolid-Blöcke auftreten können.

Das nachfolgende Beispiel soll das erfindungsgemäße Verfahren erläutern:

### Vorbemerkung

Die in den Beispielen angegebene Viskosität wurde in 0.1 %iger Lösung in Chloroform bei 25 Grad Celsius ermittelt.

### Beispiel 1

In einem 100 ml Rundkolben werden 2.73 g Poly(L-lactid) einer inhärenten Viskosität von 0.12 dl/g in 50 ml Dichlormethan gelöst. Die Lösung wird nacheinander mit 1.4 ml Triethylamin und 122 mg 4-Dimethylaminopyridin versetzt und anschließend auf 0°C abgekühlt. Nach Zugabe von 297 mg Bis(trichlormethyl)carbonat wird 3 Stunden bei 0°C und anschließend weitere 18 Stunden bei Raumtemperatur gerührt. Das Polymer wird mit 300 ml Methanol ausgefällt, mit Methanol nachgewaschen und bei 40°C getrocknet. Die inhärente Viskosität des ausgefällten Polymeren beträgt 0.49 dl/g.

## Patentansprüche

1. Verfahren zum Herstellen von Polyestern auf der Basis von Hydroxycarbonsäuren gemäß folgendem Reaktionsschema 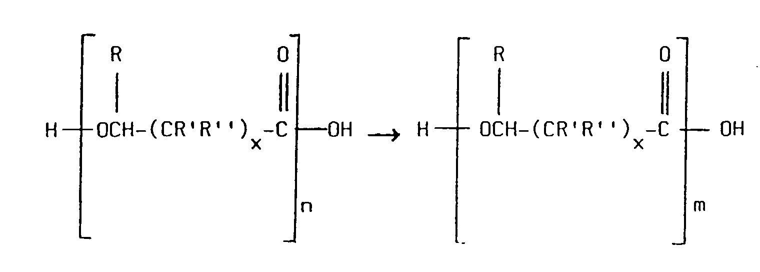
- worin R, R' und R" unabhängig voneinander einen Alkylrest und/oder Wasserstoff und
x und m sowie n ganze Zahlen - wobei m > n ist und
x auch Null sein kann -
bedeuten können, dadurch gekennzeichnet, daß die Kondensationsreaktion in Gegenwart von Phosgen, Diphosgen oder Triphosgen durchgeführt wird.

2. Verfahren nach Anspruch 1, dadurch gekennzeichnet, daß die Umsetzung in Gegenwart eines Acylierungskatalysators erfolgt.

3. Verfahren nach Anspruch 2, dadurch gekennzeichnet, daß als Acylierungskatalysator ein 4-Dialkylaminopyridin eingesetzt wird.

4. Verfahren nach Anspruch 3, dadurch gekennzeichnet, daß 4-Dimethylaminopyridin als Acylierungskatalysator eingesetzt wird.

5. Verfahren nach Anspruch 3, dadurch gekennzeichnet, daß 4-Piperidinopyridin als Acylierungskatalysator eingesetzt wird.

6. Verfahren nach Anspruch 3, dadurch gekennzeichnet, daß 4-Pyrrolidinopyridin als Acylierungskatalysator eingesetzt wird.

7. Verfahren nach einem der Ansprüche 1 bis 6, dadurch gekennzeichnet, daß α-Hydroxycarbonsäuren und/oder deren Oligomere eingesetzt werden.

8. Verfahren nach einem der Ansprüche 1 bis 6, dadurch gekennzeichnet, daß β-Hydroxycarbonsäuren und/oder deren Oligomere eingesetzt werden.

9. Verfahren nach einem der Ansprüche 1 bis 6, dadurch gekennzeichnet, daß α- und β-Hydroxycarbonsäuren und/oder deren Oligomere eingesetzt werden.

10. Verfahren nach einem der Ansprüche 1 bis 6, dadurch gekennzeichnet, daß Glykolsäure und/oder deren Oligomere eingesetzt werden.

11. Verfahren nach einem der Ansprüche 1 bis 6, dadurch gekennzeichnet, daß Milchsäure in Form von D- und/oder L-Milchsäure und/oder deren Oligomere eingesetzt wird.

12. Verfahren nach einem der Ansprüche 1 bis 6, dadurch gekennzeichnet, daß Glykolsäure und Milchsäure in Form von D- und/oder L-Milchsäure und/oder deren Oligomere eingesetzt werden.

13. Verwendung von Phosgen, Diphosgen oder Triphosgen als Verknüpfungsreagenzien bei der Herstellung von Polyestern auf der Basis von Hydroxycarbonsäuren.

## Claims

1. Process for preparing polyesters based on hydroxycarboxylic acids according to the following reaction plan: 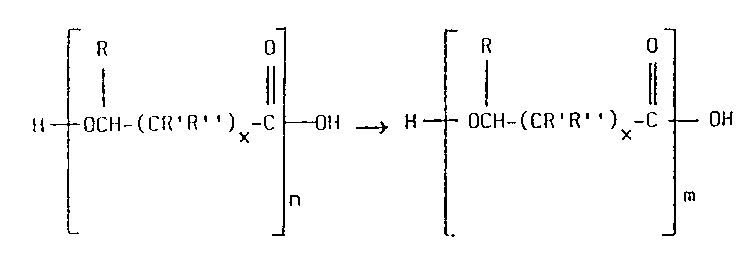 [wherein R, R' and R" independently of one another may denote an alkyl group and/or hydrogen and
x and m and n may denote integers (whilst m > n and x may also be zero)]
characterised in that the reaction of condensation is carried out in the presence of phosgene, diphosgene or triphosgene.

2. Process according to claim 1, characterised in that the reaction is carried out in the presence of an acylation catalyst.

3. Process according to claim 2, characterised in that a 4-dialkylaminopyridine is used as the acylation catalyst.

4. Process according to claim 3, characterised in that 4-dimethylaminopyridine is used as the acylation catalyst.

5. Process according to claim 3, characterised in that 4-piperidinopyridine is used as the acylation catalyst.

6. Process according to claim 3, characterised in that 4-pyrrolidinopyridine is used as the acylation catalyst.

7. Process according to any one of claims 1 to 6, characterised in that α-hydroxycarboxylic acids and/or the oligomers thereof are used.

8. Process according to any one of claims 1 to 6, characterised in that β-hydroxycarboxylic acids and/or the oligomers thereof are used.

9. Process according to any one of claims 1 to 6, characterised in that α- and β-hydroxycarboxylic acids and/or the oligomers thereof are used.

10. Process according to any one of claims 1 to 6, characterised in that glycolic acid and/or the oligomers thereof are used.

11. Process according to any one of claims 1 to 6, characterised in that lactic acid in the form of D- and/or L-lactic acid and/or the oligomers thereof are used.

12. Process according to any one of claims 1 to 6, characterised in that glycolic acid and lactic acid in the form of D- and/or L-lactic acid and/or the oligomers thereof are used.

13. Use of phosgene, diphosgene or triphosgene as linking reagents in the preparation of polyesters based on hydroxycarboxylic acids.

## Revendications

1. Procédé de préparation de polyesters à base d'acides hydroxycarboxyliques selon le schéma réactionnel suivant 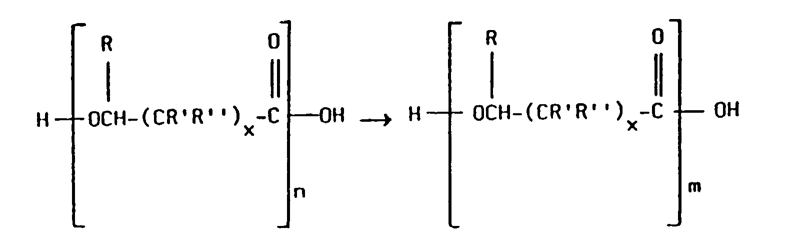 dans lequel R, R' et R'' peuvent représenter indépendamment les uns des autres un reste alkyle et/ou l'hydrogène et
x et m ainsi que n peuvent représenter des nombres entiers, avec m > n et
x peut aussi être nul,
caractérisé en ce que la réaction de condensation est conduite en présence de phosgène, de diphosgène ou de triphosgène.

2. Procédé selon la revendication 1, caractérisé en ce que la réaction se déroule en présence d'un catalyseur d'acylation.

3. Procédé selon la revendication 2, caractérisé en ce que l'on utilise une 4-dialkylaminopyridine comme catalyseur d'acylation.

4. Procédé selon la revendication 3, caractérisé en ce que l'on utilise la 4-diméthylaminopyridine comme catalyseur d'acylation.

5. Procédé selon la revendication 3, caractérisé en ce que l'on utilise la 4-pipéridinopyridine comme catalyseur d'acylation.

6. Procédé selon la revendication 3, caractérisé en ce que l'on utilise la 4-pyrrolidinopyridine comme catalyseur d'acylation.

7. Procédé selon l'une des revendications 1 à 6, caractérisé en ce que l'on utilise des acides α-hydroxycarboxyliques et/ou leurs oligomères.

8. Procédé selon l'une des revendications 1 à 6, caractérisé en ce que l'on utilise des acides β-hydroxycarboxyliques et/ou leurs oligomères.

9. Procédé selon l'une des revendications 1 à 6, caractérisé en ce que l'on utilise des acides α- et β- hydroxycarboxyliques et/ou leurs oligomères.

10. Procédé selon l'une des revendications 1 à 6, caractérisé en ce que l'on utilise l'acide glycolique et/ou ses oligomères.

11. Procédé selon l'une des revendications 1 à 6, caractérisé en ce que l'on utilise l'acide lactique sous forme d'acide D- et/ou L-lactique et/ou ses oligomères.

12. Procédé selon l'une des revendications 1 à 6, caractérisé en ce que l'on utilise l'acide glycolique et l'acide lactique sous forme d'acide D- et/ou L-lactique et/ou leurs oligomères.

13. Utilisation du phosgène, du diphosgène ou du triphosgène comme réactifs de liaison lors de la préparation de polyesters à base d'acides hydroxycarboxyliques.
